# EUROPÄISCHE PATENTSCHRIFT

(11) **EP 3 548 677 B1**
(45) Veröffentlichungstag und Bekanntmachung des Hinweises auf die Patenterteilung: **29.09.2021**
(21) Anmeldenummer: 18724152.6
(22) Anmeldetag: 26.04.2018
(51) Int. Cl.: E04F 15/02, E04F 15/18

(54) **VERFAHREN ZUR SANIERUNG UND ZUM NEUBAU VON FEUCHTRÄUMEN**
METHOD FOR RENOVATING AND RECONSTRUCTING WET ROOMS
PROCÉDÉ POUR L'ASSAINISSEMENT ET LA CONSTRUCTION DE PIÈCES HUMIDES

(30) Priorität: 27.04.2017 DE 102017109075
(43) Veröffentlichungstag der Anmeldung: 09.10.2019
(73) Patentinhaber: wedi GmbH, 48282 Emsdetten (DE)
(72) Erfinder: WEDI, Stephan, 48282 Emsdetten (DE)
(74) Vertreter: Träger, Denis
(86) Internationale Anmeldenummer: PCT/EP2018/060772
(87) Internationale Veröffentlichungsnummer: WO 2018/197629

(56) Entgegenhaltungen:
- EP-A2- 1 088 944
- DE-U1-202010 003 239
- Wedi Gmbh: "Abdichten und Entkoppeln Wissenswertes und Technik", , 22. März 2013 (2013-03-22), XP055491041, Cremannsbusch 7, 48282 Emsdetten Gefunden im Internet: URL:https://www.wedi.de/downloads/ [gefunden am 2018-07-09]
- Wissenswertes Wedi Gmbh: "Erstellen bodengleicher Duschen", E, 13. Mai 2013 (2013-05-13), Seiten 1--56, XP055491158, Cremannsbusch 7, 48282 Emsdetten, Gefunden im Internet: URL:https://www.wedi.de/downloads/ [gefunden am 2018-07-09]

## Beschreibung

Die Erfindung bezieht sich auf ein Verfahren zur Sanierung und zum Neubau von Feuchträumen, wie Küchen- oder Waschräumen bzw. Badezimmern, bei dem großformatige Plattenmodule, bei welchen es sich um Bauplatten mit einem Schaumkern handelt, an einer Wand und/oder einem Boden und/oder einer Raumdecke des Feuchtraums eingebracht werden.

Die genannten Plattenmodule sind insbesondere zum Neubau von Feuchträumen in Trockenbauweise und zur Sanierung bestehender Feuchträume einsetzbar. Nach den Bauordnungen sind bauliche Anlagen so auszuführen, dass durch Wasser, Feuchtigkeit, sowie andere chemische, physikalische oder biologische Einflüsse, Gefahren oder unzumutbare Belästigungen nicht entstehen. Durch Feuchtigkeit beanspruchte bauliche Anlagen sind aus diesem Grund gegen Durchfeuchtung zu schützen.

Beim Neubau von Feuchträumen im Innenbereich haben sich Trockenbaukonstruktionen mit Unterkonstruktionen aus Holz oder Metall, beplankt mit plattenförmigen Werkstoffen, in Kombination mit Abdichtungssystemen in Bädern und Feuchträumen seit Jahrzehnten bewährt und gelten als allgemein anerkannte Regel der Technik. Zu den Trockenbaukonstruktionen zählen auch Trennwände aus Gips-Wandbauplatten, die im Wohnungsbau angewendet werden. In Hotels, Krankenhäusern, Schulen, Bürogebäuden und im Wohnungsbau kommen, unabhängig von der Bauweise, Trockenbaukonstruktionen für Bäder und Feuchträume zum Einsatz.

Bei bekannten Verfahren zur Sanierung bestehender Feuchträume erfolgt die Sanierung häufig, indem zunächst vorgefertigte Plattenmodule an den zu sanierenden Wand- und/oder Boden- und/oder Deckenflächen angebracht werden. Diese Verfahren sind in Informationsschriften der Anmelderin mit dem Titel "Abdichten und Entkoppeln" sowie "Erstellen bodengleicher Duschen" näher beschreiben. Die vorhandenen Wand-, Boden, oder Deckenflächen können auch als Bestand bezeichnet werden. Bei den Plattenmodulen kann es sich beispielsweise um Bauplatten aus Gipskarton oder extrudiertem Polystyrol handeln Um die Plattenmodule anzubringen wird in der Regel zunächst ein Kleber auf Boden, Wand oder Raumdecke des Feuchtraums aufgetragen. Unmittelbar danach wird das Plattenmodul angepresst und durch entsprechendes Nachkorrigieren in Lot und Flucht an der gewünschten Position festgelegt. Nachfolgend werden die weiteren Plattenmodule angebracht, wodurch im Ergebnis der zu sanierende Bereich im gewünschten Umfang mit nebeneinander verlegten Plattenmodulen bedeckt wird.

Um die zwischen den Plattenmodulen verbleibenden Fugen abzudichten werden nach dem Ankleben der Plattenmodule auf der zugänglichen Sichtseite an den Stoßkanten und an den Wandecken bzw. in der Ecke von Boden und Wand Dichtbänder aufgeklebt und abgespachtelt. Da es sich hierbei um eine "auftragende Konstruktion" handelt wird in der Regel ein Dichtkleber verwendet, der sowohl gute Kleb- als auch gute Dichteigenschaften aufweist. Soweit auf diese Dichtstellen nachfolgend eine Nutzschicht, beispielsweise ein Fliesenbelag, aufgebracht wird, sind die Dichtbänder ästhetisch nicht weiter störend und sorgen für eine zuverlässige Abdichtung gegen das Eindringen von Wasser in Fuge und Wand.

Allerdings kann eine nachfolgend aufgebrachte Nutzschicht etwaige unmittelbar unter der Nutzschicht liegende Dichtbänder auch nicht in allen Fällen kaschieren. Handelt es sich bei dem Fliesenbelag beispielsweise um Mosaikfliesen, deren häufig kleinteilige Einzelteile durch ein rückseitiges Gewebe verbunden sind, so weisen diese Mosaik-Elemente eine Flexibilität auf, die im Untergrund vorhandene Unebenheiten im fertig montierten Zustand von der Sichtseite her sichtbar machen. Ein unmittelbar unter einer Mosaik-Fliesenmatte angebrachtes Dichtband kann sich somit als Unebenheit auf der Sichtseite abzeichnen.

Weisen die Plattenmodule jedoch bereits eine Nutzschicht auf oder handelt es sich um sonstige Platten die nicht mit einer zusätzlichen Nutzschicht bedeckt werden sollen, beispielsweise um Natursteinplatten, können die Fugen nach dem Anbringen der Plattenmodule aus ästhetischen Gründen nicht mehr mit breiten Abdichtbändern überklebt werden. Die Abdichtung der zwischen den Plattenmodulen verbliebenen Fugen kann in diesem Fall nur durch Einbringen von Dichtmittel in die Fugen, beispielsweise Silikon oder einem Dichtkleber, erfolgen. Bei einer solchen Fugenabdichtung handelt es sich grundsätzlich um eine Wartungsfuge, da Silikon und Dichtkleber gewissen Alterungsprozessen unterliegen und in aller Regel früher oder später erneuert werden müssen. Die Abdichtung von Fugen nach Anbringung der Plattenmodule und ohne Verwendung von die Fugen überdeckenden Dichtbändern ist somit problematisch und häufig nicht dauerhaft wasserdicht. Weiterhin ist es optisch störend, wenn die zwischen den Plattenmodulen befindlichen Fugen anders aussehen als die Fugen zwischen auf den Plattenmodulen befindlichen Fliesen. Erwünscht ist vielmehr, dass die Übergangsstellen zwischen zwei Plattenmodulen im fertig montierten Zustand unauffällig, im Idealfall nicht erkennbar, sind.

Aus der Informationsbroschüre "Abdichten und Entkoppeln - Wissenswertes und Technik" der Anmelderin ist der Einsatz großformatiger Abdichtungsbahnen unterhalb eines Fliesenbelages bekannt. Diese Abdichtbahnen werden vollflächig und einander überlappend unterhalb eines Fliesenbelages aufgebracht und bilden so eine vollflächige Dichtschicht zwischen einem Boden und den darauf aufzubringenden keramischen Fliesen oder Platten. Das hierbei offenbarte Verfahren ist relativ aufwendig, weil zur Erzielung der gewünschten Abdichtfunktion der Untergrund komplett mit einander überlappenden Dichtbahnen ausgekleidet wird.

Eine weitere Informationsbroschüre der Anmelderin mit dem Titel "Erstellen bodengleicher Duschen" erläutert ein Verfahren zum Einbau eines von der Anmelderin hergestellten Duschbodenelementes mit der Typbezeichnung "Fundo". Bei dem Duschbodenelement "Fundo" handelt es sich um ein bekanntes bodengleiches Duschbodenelement auf Basis eine Hartschaumkerns mit integriertem Ablauf. Dieses Duschbodenelement ist in eine dafür vorgesehene Aussparung in einen Boden eines Sanitärbereiches einsetzbar. Die Abdichtung aller Stöße und Anschlussbereiche sowie Durchdringungen erfolgt nachdem das Duschbodenelement an seine Einbauposition eingesetzt worden ist durch das Aufbringen von Dichtband und Dichtschlämmen auf die abzudichtenden Fugen und Eckbereiche.

Aus CH 682246 A5 ist ein Verfahren zur Abdichtung von Fugen bekannt, bei dem, wie bereits erläutert, zunächst eine zwischen zwei Wandteilen befindliche Fuge mittels eines speziellen Dichtungsbandes überdeckt wird und die so abgedichtete Wandflächen anschließend mit einem Fliesenbelag versehen wird.

Mittels analoger Vorgehensweise lassen sich auch Rohrdurchgänge abdichten. Aus CH 681651 A5 ist eine Dichtungs-Manschette zur Abdichtung eines Rohrdurchgangs in einer Maueroberfläche bekannt. Die Dichtungs-Manschette ist dazu vorgesehen, eine zwischen einem Rohr und dem Rohrdurchgang vorhandene Fuge abzudichten. Hierzu weist die Dichtungsmanschette einen etwas kleineren Durchmesser als das Rohr auf. Sie ist zudem elastisch und lässt sich somit über das Rohr stülpen. Die über das Rohr gestülpte Dichtungs-Manschette wird analog zu dem aus CH 682246 A5 bekannten Dichtband zunächst auf die den Rohrdurchgang umgebende Wand aufgeklebt. Im Anschluss daran wird auf die Oberfläche der Dichtungs-Manschette eine Mörtelschicht und nachfolgend ein Fliesen- oder Kunststoffbelags angebracht.

DE 20 2010 003 239 U1 betrifft einen Grundkörper für Duschen mit bodenebenem Zugang und einer Randeinfassung. Der Grundkörper umfasst längsseitig angeordnete Abschlussprofile auf. Sowohl die längsseitig angeordneten Abschluss-Profile als auch de wandseitige Abkantung sind mit Dichtbändern versehen, die einen Anschluss der bauseitigen Abdichtungsebene ermöglichen. Die Abdichtung befindet sich somit unmittelbar zwischen Estrich und einem Belag aus Fliesen oder Natursteinen.

Im Ergebnis sind aus dem Stand der Technik somit zwei Verfahren bekannt, um Fugen abzudichten. Zum einen können etwaige Fugen nach Anbringen eines Wandbelages mittels eines Fugen-Dichtmittels, beispielsweise Silikon, abgedichtet werden. Zum anderen ist es bekannt, Fugen mittels Dichtbändern oder Dichtmanschetten abzudichten und die in der Regel unansehnlichen Dichtbänder nachfolgend mit einer Deckschicht, beispielsweise einem Fliesenbelag zu überdecken.

Die Abdichtung erfolgt beim bekannten Stand der Technik somit grundsätzlich von der in den Raum weisenden Seite, also der Vorderseite aus.

Das bekannte Dichtband-Verfahren eignet sich gut für individuelle Anwendungsfälle, bei denen die Nutzschicht separat nach Anbringung und Abdichtung der Plattenmodule aufgebracht wird. Das bekannte Verfahren, bei dem zunächst eine Sichtfläche hergestellt und die hierbei entstandenen Fugen zwischen den Platten mittels einer Dichtmasse wie Silikon oder Fugenmörtel abgedichtet werden, eignet sich gut für Flächen, bei denen keine besonderen Anforderungen an die Wasserdichtheit gestellt werden.

Insbesondere bei Sanierung größerer Einheiten mit wiederkehrend gleichen örtlichen Gegebenheiten, beispielsweise in Krankenhäusern, Studentenwohnheimen, Hotels und anderen öffentlichen Gebäuden, die aus unterschiedlichen Gründen renoviert werden müssen, stellt ein gleichzeitiges Sanieren von vielen Feuchträumen ein Problem dar. Der für die Sanierungsmaßnahme zur Verfügung stehende Zeitrahmen ist oft zeitlich begrenzt, so dass die mit der Sanierung beauftragten Baufirmen unter enormem Zeitdruck stehen. Bei solchen Anwendungsfällen ist sowohl eine rationelle Arbeitsweise unter Verwendung vorgefertigter, mit einer Nutzschicht versehener Plattenmodule als auch eine dauerhaft wasserdichte und unempfindliche Abdichtung der Fugen wünschenswert.

Es stellt sich also die Aufgabe, ein Verfahren zur Sanierung von Feuchträumen, beispielsweise in öffentlichen Gebäuden, anzugeben, mit dem die beschriebenen Nachteile vermieden werden und Sanierungsmaßnahmen rationell und unter Sicherstellung der gewünschten Wasserdichtheit durchführbar sind. Zudem soll das Verfahren den in den relevanten Normen, insbesondere der Norm DIN 18534, enthaltenen Anforderungen genügen.

Diese Aufgabe ist durch das im Anspruch 1 angegebene Verfahren gelöst. Vorteilhafte Weiterbildungen sind Gegenstand der Unteransprüche.

Bei den zur Sanierung der Feuchträume in Betracht kommenden Plattenmodulen kann es sich um Bauplatten mit oder ohne aufgebrachte Nutzschicht handeln. Unter einer Nutzschicht wird ein Fliesenbelag oder ein anderer Belag verstanden.

Die Plattenmodule können auch mehrschichtig aufgebaut sein. Unter einer Bauplatte wird sowohl im Trockenbau als auch im Gewerk der Fliesenleger eine Platte verstanden, die auf der Basis eines Schaumkerns hergestellt ist, bei welchem es sich vorzugsweise um einen extrudierten oder expandierten Polystyrol-Hartschaukern handelt, und die vorzugsweise auf beiden Seiten eine gewebearmierte zementäre Beschichtung aufweist.

Weiterhin kann ein mehrschichtiges Plattenmodul über eine Klebeschicht mit einer Nutzschicht versehen sein. Solche Plattenmodule können industriell vorgefertigt sein und werden nachfolgend als vorgefertigte Plattenmodule bezeichnet.

Weiterhin kann es sich bei den Plattenmodulen um vorgefertigte Funktionselemente, insbesondere vorgefertigte Duschbodenplatten, handeln.

Das erfindungsgemäße Verfahren ist sowohl für Plattenmodule ohne aufgebrachte Nutzschicht, als auch für vorgefertigte Plattenmodule mit aufgebrachter Nutzschicht als auch für sonstige wasserundurchlässige Platten geeignet. Nachfolgend wird unter einem Plattenmodul somit sowohl eine Bauplatte selbst, als auch eine Bauplatte mit aufgebrachter Nutzschicht verstanden.

Das erfindungsgemäße Verfahren wird in Anspruch 1 definiert und umfasst folgende Verfahrensschritte
a) Bereitstellen von Plattenmodulen, welche einen wasserundurchlässigen Kern auf Basis eines Schaumkerns umfassen, zum Einbau in den Feuchtraum;
b) Festlegen einer Einbauposition eines Plattenmoduls am Boden und/oder an der Wand und/oder der Raumdecke des Feuchtraums;
c) Anbringen wenigstens eines wasserresistenten Abdichtband-Abschnittes auf der Wand und/oder auf dem Boden und/oder der Raumdecke des Feuchtraums in einer eine Außenkontur des Plattenmoduls abbildenden Position, so dass im fertig montierten Zustand zwischen Plattenmodul und Wand, Boden oder Raumdecke eine Abdichtung vorgesehen ist, die hinter dem Plattenmodul und damit in einem nach Anbringung der Plattenmodule nicht mehr zugänglichen Bereich angeordnet ist;
d) Aufbringen eines wasserresistenten Dichtklebers auf den wenigstens einen auf dem Boden und/oder der Wand und/oder der Raumdecke des Feuchtraums angebrachten Abdichtband-Abschnitte, derart, dass der wasserdichte Dichtkleber im fertig montierten Zustand die Randbereiche zweier benachbarter Plattenmodule durchgängig unterfüttert;
e) Anpressen eines ersten Plattenmoduls auf einen ersten Teilbereich des Dichtkleber in einer Position, in der der Abdichtband-Abschnitt und ein zweiter Teil des Dichtklebers die Außenkontur des Plattenmoduls überragt, so dass ein sich an das erste Plattenmodul anschließendes zweites Plattenmodul den das erste Plattenmodul überragenden Teil des Abdichtband-Abschnittes und den zweiten Teil des Dichtklebers abdeckt und zwischen dem ersten und dem zweiten Plattenmodul eine Dichtstelle herstellbar ist, die verhindert, dass durch eine zwischen den Plattenmodulen ausgebildete Fuge Feuchtigkeit in die Wand, den Boden oder die Raumdecke gelangen kann.

Vereinfacht gesagt erfolgt die Abdichtung bei Anwendung des erfindungsgemäßen Verfahrens hinter dem Plattenmodul. Hierfür ist es wesentlich, dass die verwendeten Plattenmodule selbst zumindest einen wasserundurchlässigen Kern haben oder insgesamt wasserundurchlässig sind oder eine wasserundurchlässige Beschichtung aufweisen. In Betracht kommen somit beispielsweise wasserdichte Kunststoff- oder Kunststoffschaumplatten auf Basis eines Schaumkerns. Bei Anwendung des erfindungsgemäßen Verfahrens ist es somit unproblematisch, wenn Wasser in die Fugen zwischen zwei Platten gelangt. Zur Seite hin, also durch die seitlichen Stoßkanten der Plattenmodule, kann das Wasser bzw. die Feuchtigkeit nicht kapillar transportiert werden, da die Plattenmodule zumindest einen wasserdichten Kern umfassen. Nach hinten, unten oder oben, das heißt zur Wand, zum Boden oder zur Raumdecke hin, kann die Feuchtigkeit ebenfalls nicht gelangen, da zwischen Plattenmodul und Wand, Boden oder Raumdecke eine Abdichtung vorgesehen ist.

Die Anwendung des erfindungsgemäßen Verfahrens ermöglicht somit eine Abdichtung in einem nach Anbringung der Plattenmodule nicht mehr zugänglichen Bereich. Die besonderen Vorteile einer solchen Abdichtung liegen darin, dass eine Fläche mit den auf Basis des erfindungsgemäßen Verfahren angebrachten Plattenmodulen:
- zum einen genauso wasserdicht ist, wie eine Fläche, bei der nach Anbringung der Platten die Abdichtung von der zugänglichen Sichtseite her mit Dichtbändern oder sonstigen Dichtmitteln erfolgt ist und
- zum anderen keine ästhetische Beeinträchtigung der Sichtfläche durch die Dichtbänder bzw. die sonstigen Dichtmittel erfolgt.

Vorzugsweise umfassen die zur Anwendung des erfindungsgemäßen Verfahrens vorgesehenen Plattenmodule eine in einem zementären Mörtel eingebettete Deckschicht, eine Klebeschicht und eine Nutzschicht. Solche Plattenmodule können besonders gut industriell vorgefertigt und in vorzugsweise standardisierte Feuchträume rationell eingebaut werden. Die einzubauenden Plattenmodule können beispielweise eine Grundfläche von einem Meter mal einem Meter aufweisen und von der späteren Sichtseite her in vorgefertigter Weise mit einem beliebigen Fliesenbelag versehen sein. Alternativ zu der als Stand der Technik bekannten Bauweise, bei der:
- zunächst Bauplatten angebracht werden;
- dann die Stoßfugen an den Rädern der Bauplatten abgedichtet werden;
- und schließlich eine Nutzschicht manuelles und individuelles auf die abgedichteten Bauplatten aufgebracht wird,
können mit dem beanspruchten Verfahren Bauplatten mit bereits darauf angebrachter Nutzschicht an Wand, Boden oder Raumdecke des Feuchtraumes angebracht und zuverlässig abgedichtet werden. Hierdurch reduziert sich der für die Sanierung auf der Baustelle benötigte Zeitbedarf erheblich

Ein weiterer Vorteil liegt darin, dass die Plattenmodule einbaubar und abdichtbar sind ohne dass zuvor die bestehende Wand- und Bodenverkleidung entfernt werden muss.

Das verwendete Plattenmodul umfasst eine Bauplatte, die aus Vollkunststoff, faserverstärktem Kunststoff wie Kunstharz, oder aus einem beidseitig mit Verstärkungsschicht belegten Hartschaumkörper bestehen. Der Hartschaumkörper besteht vorzugsweise aus HFCKWfreiem, extrudiertem oder expandierten Polystyrol-Hartschaum und bildet einen leichten, wärmedämmenden Kern. Der Kern kann an mindestens einer Flachseite, vorzugsweise an beiden Flachseiten, mit einem faserverstärkten, erhärteten Mörtel beschichtet sein. Die Bauplatte aus Polystyrol-Hartschaum ist wasserundurchlässig und schützt nachhaltig vor Schimmelbildung.

Unter einer zementären Klebeschicht wird ein feuchtigkeitsbeständiger Dünnbettmörtel auf Basis hydraulischer Bindemittel verstanden.

Vorteilhaft ist, dass für jeden zu sanierenden Feuchtraum, beispielsweise einen Küchenraum oder ein Badezimmer, eine bestimmte Anzahl von Plattenmodulen bereitgestellt werden kann. Es liegt auf der Hand, dass sich die größten arbeitswirtschaftlichen Vorteile bei Sanierung eines größeren Objektes, wie einem Studentenwohnheim oder einem Hotel mit vielen Feuchträumen derselben Art und Größe ergeben.

Bei der Renovierung wird zunächst die Einbauposition der Plattenmodule festgelegt, indem die Konturen der auf den vorhandenen Boden oder an die vorhandene Wand des Feuchtraums anzubringenden Plattenmodule markiert werden. Auf die markierten Konturen werden Abdichtbänder in Form von Abdichtbandabschnitten angebracht, bei denen es sich insbesondere um Schaumstreifen, Blechstreifen, Folienstreifen, Kunststoffstreifen, Dichtbandstreifen oder Bauplattenstreifen handeln kann. Die Abdichtbandabschnitte können im nicht eingebauten Zustand rollbar sein und, soweit sie rollenförmig bereitgestellt werden, nach Bedarf abgelängt werden. Als Abdichtbänder besonders bevorzugt werden hydrophobe Dichtbänder.

Die Abdichtbandabschnitte werden vorzugsweise auf die Markierungen aufgeklebt. Auf die Dichtbänder werden vorzugsweise jeweils zwei voneinander in einem Abstand liegende, ununterbrochene, in Längsrichtung verlaufende Klebewülste aufgetragen, die im fertig montierten Zustand jeweils unterhalb der Randbereiche benachbarter Plattenmodule liegen. Alternativ zu zwei beabstandeten Klebstoffraupen kann auch eine einzige Klebstoffraupe vorgesehen sein, die so breit ist, dass sie im fertig montierten Zustand beide Randbereiche zweier benachbarter Plattenmodule vollständig dichtend unterfüttert.

Die Klebewülste können auch zwischen den Dichtbändern direkt auf den Boden oder an die Wand gezogen werden um so die Bindung zwischen Wand und Plattenmodul zu verstärken. Weitere Dichtbänder an diesen Stellen erübrigen sich allerdings, da die Plattenmodule selbst wasserdicht sind und Wasser nur durch die Fugen zweier benachbarter Plattenmodule oder im Bereich von in den Plattenmodulen enthaltenen Rohrdurchführungen eindringen kann. Von entscheidender Bedeutung für die Dichtigkeit ist ein ununterbrochener Verlauf der Klebewülste.

Auf die Rückseite der Plattenmodule muss kein Dicht- oder Klebstoff bzw. Mörtel aufgetragen und keine Dichtfolie bzw. kein Dichtband angeklebt werden. Die Handhabung der Plattenmodule während des Einbaus vereinfacht sich hierdurch und der Arbeitsprozess ist schneller und sauberer.

Vorzugsweise wird zunächst der Boden eines Feuchtraums mit Plattenmodulen belegt und danach die Wände. Alternativ dazu ist es aber auch möglich, die Plattenmodule erst an den Wänden und dann am Boden oder erst an der Raumdecke und dann an den Wänden anzubringen. Selbstverständlich ist es auch möglich, nur den Boden oder nur die Wände oder nur die Decke mit den erfindungsgemäßen Plattenmodulen zu belegen und im Übrigen herkömmliche Boden- oder Wandbeläge anzubringen.

Weiterhin wird bevorzugt, dass der mit der Wand verklebte und senkrecht zum Boden angeordnete Abdichtband-Abschnitt den entlang der Übergangslinie des Bodens zur Wand verlaufenden Abdichtband-Abschnitt zumindest teilweise überlappend verlegt wird, so dass auch im Kreuzungsbereich zweier Abdichtbänder wasserdichte Abdichtstellen ausbildbar sind. Soweit an einem vorgefertigten Plattenmodul eine Ausnehmung bzw. durchgehende Öffnung, insbesondere für eine Rohrdurchführung, eingearbeitet ist oder eingearbeitet wird, wird dieser Bereich ebenfalls mit dem erfindungsgemäßen Verfahren abgedichtet indem:
- um die Rohrdurchführung herum Dichtkleber auf die Wand aufgetragen wird,
- eine flache Dichtmanschette eingesetzt und eingedrückt wird,
- auf die Dichtmanschette Dichtkleber ohne Unterbrechungen aufgetragen wird,
- das vorgefertigte, eine Öffnung aufweisende, Plattenmodul auf die Klebstoffraupen aufgelegt und angepresst wird.

Ergänzend können auf die Wand, insbesondere in der Nähe der Rohrdurchführung, mehrere voneinander beabstandete Klebstoffraupen aufgetragen werden;

Ein Sanierungssatz ist Teil der Offenbarung, aber nicht Teil der Erfindung und kann zur Durchführung des beschriebenen Verfahrens anwendbar sein, wobei der Sanierungssatz umfasst:
- wenigstens ein vorgefertigtes, großformatiges Plattenmodul (10, 10'), umfassend eine Bauplatte, eine Nutzschicht und wenigstens eine dazwischen liegende zementäre Klebeschicht,
- wenigstens ein Abdichtband, von dem sich Abdichtband-Abschnitte ablängen lassen,
- und einen wasserresistenten Dichtkleber

Das erfindungsgemäße Verfahren kann auch bei Böden durchgeführt werden, die einen sogenannten "schwimmenden Estrich" aufweisen. Bei einem Boden mit schwimmendem Estrich ist in aller Regel zunächst Dämmmaterial, beispielsweise in Form von Styroporplatten, auf eine Rohbetondecke gelegt worden. Zu den Wänden hin ist eine Trittschalldämmung verlegt, beispielweise in Form von Schaumstoffstreifen. Ein auf einen so vorbereiteten Boden aufgegossener Estrichbeton bildet eine Betonplatte aus, die auf dem Styropor "schwimmt" und keinerlei Kontakt zu Wänden und Boden hat. Dadurch kann Trittschall nicht auf andere Räume übertragen werden.

Um die Entkopplung der Bodenplatte zu den umgebenden Raumwänden bei Durchführung des erfindungsgemäßen Verfahrens beizubehalten, kann ein spezielles Entkopplungsband vorgesehen sein. Hierbei kann es sich beispielsweise um ein Butyl-Wannendichtband handeln. Ein Butyl-Wannendichtband umfasst ein Polypropylenvlies, welches mit einem thermoplastischen Elastomer (TPE) beschichtet ist. Auf dem TPE-beschichteten Polypropylenvlies ist ein Butylstreifen aufgezogen. Der Butylstreifen ist selbstklebend und verfügt über gute Haftungseigenschaften. Das Wannendichtband ist ca. 2 mm bis 5 mm dick und befindet sich im eingebauten Zustand zwischen den auf dem Boden eingebrachten Bodenplatten und den umgebenden Wänden und entkoppelt beide voneinander.

Vorzugsweise ist das Entkopplungsband so breit wie die Bodenplatte dick ist. Da es selbstklebend ist, kann es unmittelbar bevor eine Bodenplatte eingesetzt wird an die zu einer Wand gerichteten Randseite einer Bodenplatte geklebt werden. Soweit es sich um eine Eck-Bodenplatte handelt, wird das Entkopplungsband dementsprechend an zwei Randseiten der Bodenplatte geklebt. Selbstverständlich ist es auch möglich, das Abdichtband zunächst an die Wand anzukleben und die Bodenplatte im zweiten Schritt hieran auszurichten.

Weitere Vorteile und Merkmale der vorliegenden Erfindung ergeben sich aus der folgenden Beschreibung einer bevorzugten Ausführungsform anhand der Zeichnung. Es zeigen:
- Fig. 1: ein Plattenmodul in einer perspektivischen Ansicht;
- Fig. 2: aufeinandertreffende Plattenmodule gemäß Fig.1 in einem Teilschnitt;
- Fig. 3: das Plattenmodul gemäß Fig.1 als Bodenelement, in Projektion auf einen alten Boden, der saniert werden soll;
- Fig. 4: das verlegte Plattenmodul aus der Fig. 3, in einer schematischen, perspektivischen Ansicht;
- Fig. 5: ein auf einem schwimmenden Estrich verlegtes Plattenmodul mit einem Entkopplungsband,
- Fig. 6: eine Ecke eines Feuchtraumes mit verlegten Abdichtband-Abschnitten vor dem Einsetzen der Plattenmodule, in einer perspektivischen Ansicht;
- Fig. 7: eine Anordnung eines vertikal an der Wand verlaufenden Abdichtband-Abschnitts mit zueinander parallel liegenden Klebstoffraupen, in einer perspektivischen Ansicht;

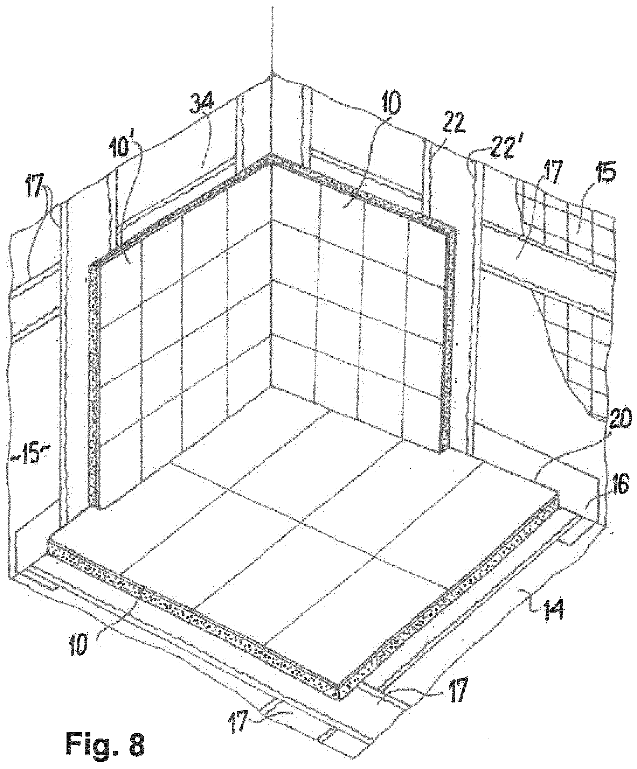

- Fig. 8: die Ecke des Feuchtraumes gemäß Fig. 6 mit eingesetzten Plattenmodulen, in einer perspektivischen Ansicht;
- Fig. 9: eine Abdichtung einer Rohrdurchführung an der Wand;
- Fig. 10: eine Fuge zwischen zwei eingebauten Plattenmodulen mit angedeuteter Dichtstelle, in einer schematischen Darstellung;
- Fig. 11: schematisch einen Sanierungssatz.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

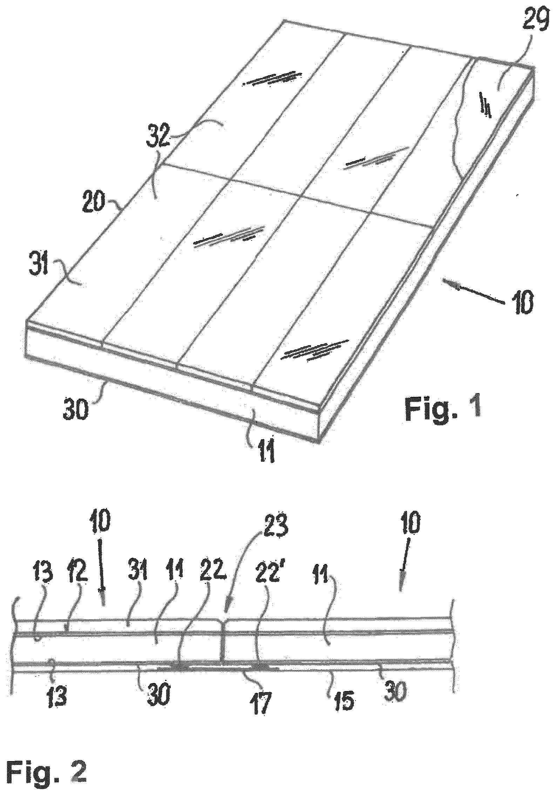

In Fig. 1 ist ein rechteckiges, großformatiges Plattenmodul 10 dargestellt, umfassend eine Bauplatte 30 und eine Nutzschicht 31 aus Natursteinfliesen 32. Alternativ zu einer Nutzschicht 31 aus Natursteinfliesen 32 kann auch ein Fliesenbelag vorgesehen sein, wodurch sich ein Plattenmodul 10' ergibt. Bei dem in den Figuren dargestellten Ausführungsbeispiel sind auf dem Boden 14 Plattenmodule 10 verlegt und an den Wänden 15 Plattenmodule 10'.

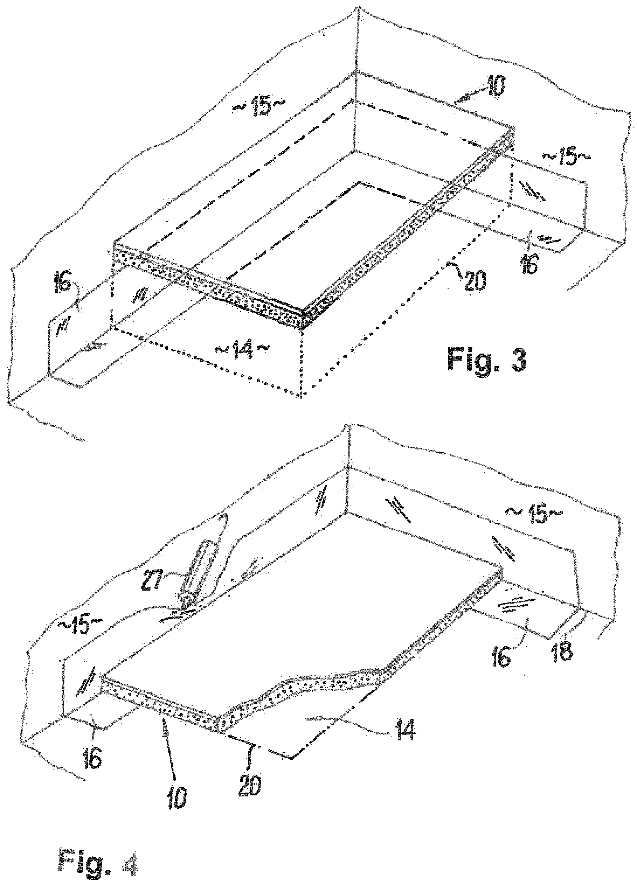

Bei beiden Plattenmodulen 10, 10' ist die Nutzschicht 31 über eine Klebeschicht 12 mit der Bauplatte 30 verbunden. Das Plattenmodul 10 weist eine Außenkontur 20 auf, welche der Markierung auf dem Boden 14 (vgl. Projektion in Fig. 3) entspricht. Eine Markierung der Eckpunkte der Außenkontur 20 ist für die nachfolgende Anbringung der Abdichtband-Abschnitte 16, 17 ausreichend.

Optional können die Plattenmodule 10, 10', insbesondere die Nutzschicht 31, mit einer abziehbaren Schutzfolie 29 abgedeckt sein.

Die sandwichartige Bauplatte 30 umfasst einen wasserdichten Kern 11 aus extrudiertem Polystyrol-Hartschaum, welcher beidseitig mit einer faserverstärkten, erhärteten Deckschicht 13 aus Kunstmörtel beschichtet ist.

Die Klebeschicht 12 besteht aus einem wasserfesten, Dünnbettmörtel auf Basis hydraulischer Bindemittel. Der Dünnbettmörtel bildet mit seiner zementären Oberfläche einen guten Haftuntergrund. Im vorliegenden Fall ist zum Beispiel Fliesenkleber Wedi 320 eingesetzt, ein Produkt der Firma wedi GmbH, Emsdetten, Deutschland.

Die Plattenmodule 10, 10' haben vorzugsweise das Format 2500 Millimeter mal 600 Millimeter. Selbstverständlich sind auch andere Formate einsetzbar. Das in den Figuren 1 und 2 gezeigte Plattenmodul 10 ist zur Verlegung auf den Boden 14 (vgl. Fig. 3) vorgesehen und hat in Abhängigkeit von der Dicke der Deckschicht 13 eine Gesamtdicke von 40 bis 50mm. Der Boden 14 weist zunächst, das heißt: vor der Sanierung, einen bereits existierenden, alten Bodenbelag auf.

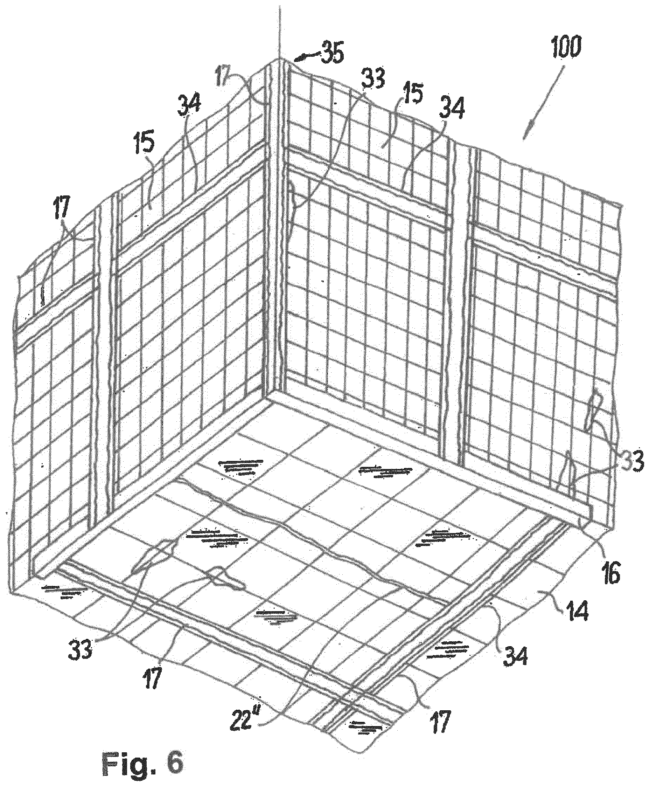

In Fig. 6 sind bestehende, verflieste, stellenweise beschädigte Wände 15 und der Boden 14 im Eckbereich eines Feuchtraumes 100 zu sehen. Die Undichtigkeiten und Beschädigungen an den alten Fliesenbelägen sind mit Bezugszahl 33 angedeutet. Um in dieser Situation den Feuchtraum instand zu setzen, müssen Sanierungsmaßnahmen getroffen werden.

Nach der Festlegung der Einbauposition jedes Plattenmoduls 10, 10' durch Markierung, z.B. Farbmarkierung, werden dort Abdichtband-Abschnitte 16, 17 klebend verlegt, wie es die Figuren 3 bis 6 zeigen. Gemäß Figuren 3, 5 und 6 werden zuerst die Abdichtband-Abschnitte 16 ähnlich wie bekannte Kunststoff-Sockelleisten verlegt. Der Abdichtband-Abschnitt 16 wird also zunächst auf den Boden 14 aufgeklebt und über einen Übergang 18 des Bodens 14 zur Wand 15 an der Wand 15 anliegend angebracht, so dass er zur Hälfte auf dem Boden 14 und zur Hälfte an der Wand 15 L-förmig aufliegt. L-förmig verlegt wird auch der an einer Ecke 35 der senkrecht zueinander angeordneten Wände 15 geführter Abdichtband-Abschnitt 17.

Aus der Fig. 4 ist ersichtlich, dass die obere Hälfte des Abdichtband-Abschnittes 16 nach dem Auflegen und Anpressen des Plattenmoduls 10 auf die bodenseitige Hälfte des Abdichtband-Abschnittes 16 und auf den Boden 14 mittels eines zusätzlichen Klebers mit der Wand 15 verklebt wird. Das Auftragen des zusätzlichen Klebers erfolgt mittels einer von Hand geführten Tube 27. Alternativ dazu kann an der Rückseite des Abdichtband-Abschnittes 17 auch ein zunächst mit einer Schutzfolie versehener Klebestreifen angebracht sein. Die Verklebung erfolgt dann durch Abziehen der Schutzfolie und Andrücken des Abdichtband-Abschnittes 17.

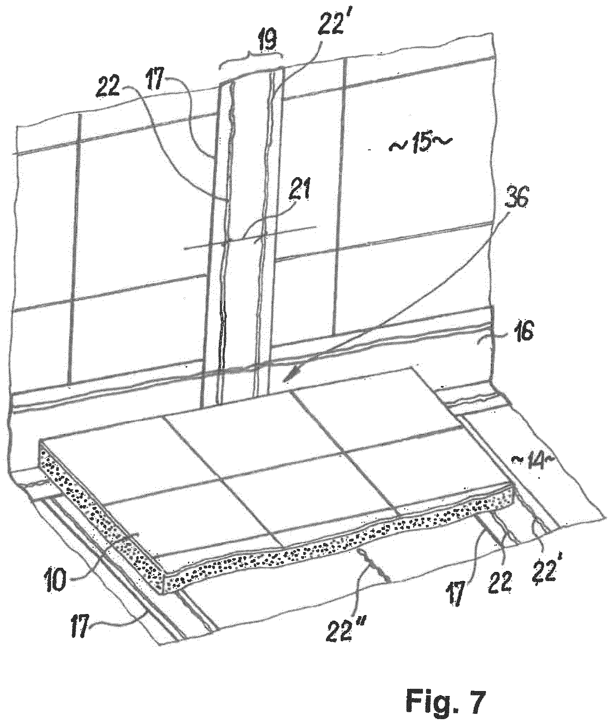

Nach lückenloser Verklebung des Abdichtband-Abschnittes 16 mit der Wand 15 werden weitere Abdichtband-Abschnitte 17 senkrecht bzw. parallel zu dem L-förmig verlegten Abdichtband-Abschnitt 16 auf den Boden 14 und auf die Wand 15 aufgeklebt. In den Figuren 6 und 7 sind Überlappungen 36 vertikal aufgeklebter Abdichtband-Abschnitte 17 an den L-förmig aufgeklebten Abdichtband-Abschnitten16 ersichtlich. Die befestigten Abdichtband-Abschnitte 16, 17 bilden rechteckige Umrandungen 34 (vgl. Fig. 6), in welche die bereitgestellten Plattenmodule 10, 10' eingesetzt werden.

Beide Arten von Abdichtband-Abschnitte 16, 17 sind vorzugsweise von einem lösemittelfreien Butylklebeband mit guten flexiblen Eigenschaften und extremer Klebekraft abgelängt.

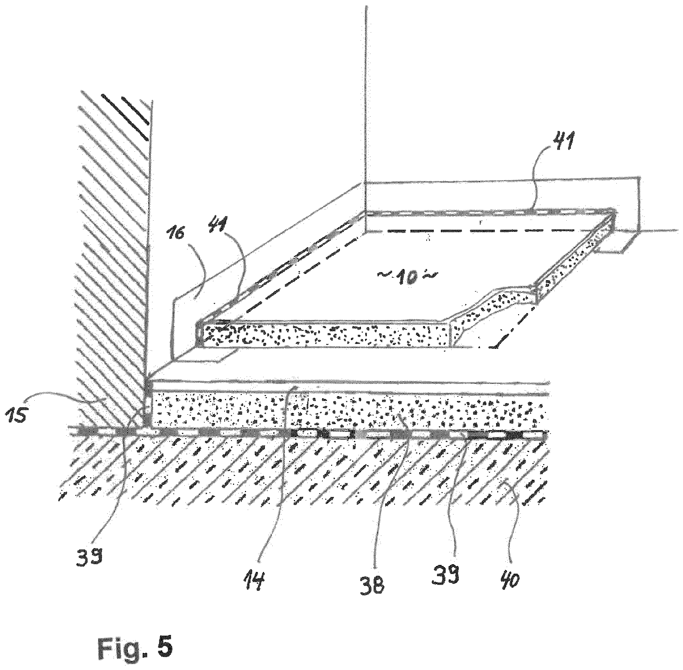

Fig. 5 zeigt eine ähnliche Ausführungsform wie Fig. 4. Im Unterschied zu der Ausführungsform gemäß Fig. 4 umfasst der ursprüngliche Boden einen schwimmenden Estrich 38, der gegenüber der Wand 15 und der Rohdecke 40 durch eine Trennschicht 39 entkoppelt ist. Damit die Entkopplung von Estrich 39 und Wand 15 beibehalten wird ist zwischen dem Plattenmodul 10 und der Wand 15 ein zusätzliches Entkopplungsband 41 vorgesehen, bei dem es sich im dargestellten Ausführungsbeispiel um ein vom Hersteller wedi angebotenes Wannendichtband plus selbstklebendem Entkopplungsstreifen handelt.

Vor dem Einsetzen des Plattenmoduls 10, 10' werden auf die Umrandung 34 Klebstoffraupen 22, 22' mit einem Durchmesser von ca. 10 mm ununterbrochen, umlaufend aufgetragen. Alternativ zu zwei parallelen Klebstoffraupen 22, 22' kann auch eine einzige Klebstoffraupe vorgesehen sein, die so bereit ist, dass sie im fertig montierten Zustand zwei benachbarte Plattenmodule 10, 10' in deren Randbereich dichtend unterfüttert.

Bei der in den Figuren 3 bis 5 dargestellten Einbausituation des Plattenmoduls 10 überragt der Abdichtbandabschnitt 16 die Oberkante des Plattenmoduls 10. Dieser das Plattenmodul 10 überragende Teil des Abdichtband-Abschnittes 16 wird nachfolgend von einer auf die Wand 15 aufzubringenden Nutzschicht 31 oder einem Plattenmodul 10 überdeckt und dichtet so die Übergangsstelle ab. Soweit die bestehende Wand 15 nicht mit einer Nutzschicht 31 oder Plattenmodulen 10 belegt werden soll, ist es auch möglich, den Abdichtband-Abschnitt 16 so einzubauen oder durch Einkürzen anzupassen, dass die Oberkante des Abdichtband-Abschnittes 16 mit der Oberkante des auf den Boden eingesetzten Plattenmoduls 10 abschließt. Diese in den Figuren nicht separat dargestellte Ausführungsform eignet sich besonders gut für Anwendungsfälle, bei denen im Rahmen einer Feuchtraumsanierung lediglich der Boden des Raumes saniert werden soll. Insbesondere eignete sich diese Ausführungsform auch gut, wenn es sich bei dem Plattenmodul um eine Duschbodenplatte handelt mit welcher eine bodengleiche Dusche in einen Sanitärraum installiert werden soll.

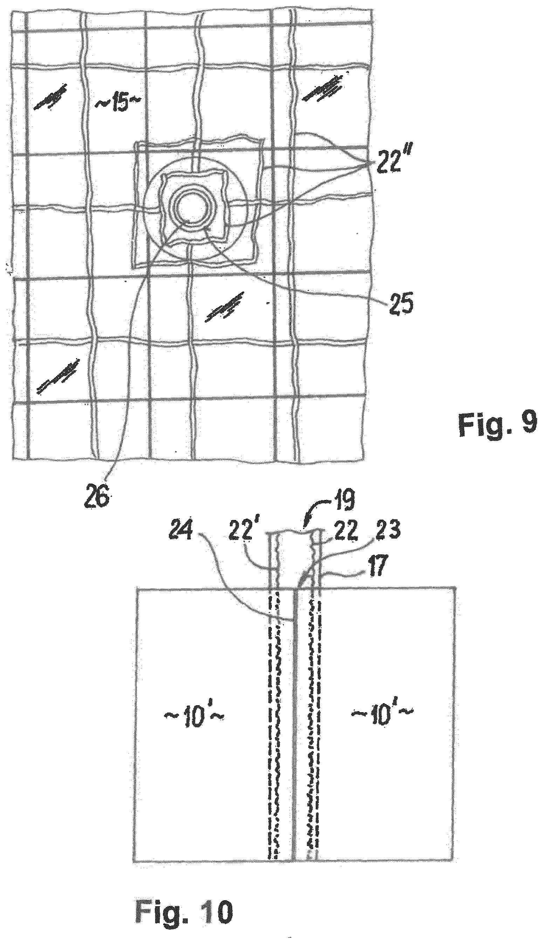

Wie die Figuren 6 und 9 zeigen, werden je zwei Klebstoffraupen 22, 22' auf jedem Abdichtband-Abschnitt 16, 17 in einem Abstand 21 voneinander gezogen. Mit den doppelt geführten Klebstoffraupen 22, 22' wird die erforderliche Dichtigkeit gewährleistet. Auch zwischen sich gegenüber liegenden Abdichtband-Abschnitten 16, 17, also innerhalb jeder Umrandung 34 wird vorzugsweise wenigstens eine weitere Klebstoffraupe 22" (vgl. Fig. 6) gezogen. Die Verwendung von wulstartigen Klebstoffraupen 22, 22', 22" trägt auch zu einer verbesserten Schallentkopplung bei.

Auf die in dieser Weise mit Klebstoffraupen belegten Umrandungen 34 werden die Plattenmodule 10; 10' durch Anpressen eingesetzt, so dass Überlappungsbereiche 19 zweier aufeinandertreffender und eine Fuge 24 bildender Plattenmodule 10; 10' entstehen. Solche Überlappungsbereiche 19 befinden sich an allen Plattenmodul-Übergängen. Nachdem alle Plattenmodule 10, 10' an Wänden 15 und Boden 14 angebracht sind, werden die Fugen 24 zwischen den Plattenmodulen10, 10' in bekannter Weise mit einem Fugenmörtel verfüllt und abgedichtet. Dadurch, dass die Klebstoffraupen 22, 22' ununterbrochen verlaufen, werden zwischen den Plattenmodulen 10; 10' Dichtstellen 23 (vgl. Figuren 2 und 10) hergestellt, die selbst dann, wenn die Fugen 24 zwischen den Plattenmodulen 10, 10' schlecht abgedichtet sind oder durch Setzprozesse undicht werden, die Weiterleitung von durch undichte Fugen 24 eindringendem Wasser hinter die Plattenmodule 10, 10' verhindert.

Auf die gleiche Weise lassen sich auch die notwendigen Rohrdurchführungen vor dem Einsetzen des Plattenmoduls 10' mit Klebstoffraupen 22" gut abdichten. Die Fig. 9 zeigt einen Wandabschnitt mit einer Öffnung 25 für eine Rohrdurchführung 26. Um die Rohrdurchführung herum ist eine Dichtmanschette 28 angebracht. Vor und nach dem Auflegen der Dichtmanschette 28 wird auf die bestehende Wand 15 um die Rohrdurchführung 26 herum ein Kleb- und Dichtstoff ohne Kleberstegunterbrechung in einer zur Abdichtung ausreichenden Menge aufgetragen und sorgfältig abgespachtelt. Auch auf die umliegenden Bereiche der Rohrdurchführung 26 werden zusätzliche Klebstoffraupen 22" gezogen. Erst danach wird ein Plattenmodul 10' eingesetzt, an welchem eine vorher eingebrachte Öffnung (nicht dargestellt) an die Lage der Rohrdurchführung 26 angepasst ist.

Für alle Klebstoffraupen 22, 22', 22" wurde ein flexibler, wasserresistenter Kleb- und Dichtstoff "wedi 610", ein Produkt der Firma wedi GmbH, Emsdetten, Deutschland, verwendet.

Das Andrücken der Plattenmodule 10; 10' auf die Klebewülste kann manuell oder mechanisch, beispielsweise anhand einer Vakuumstütze erfolgen.

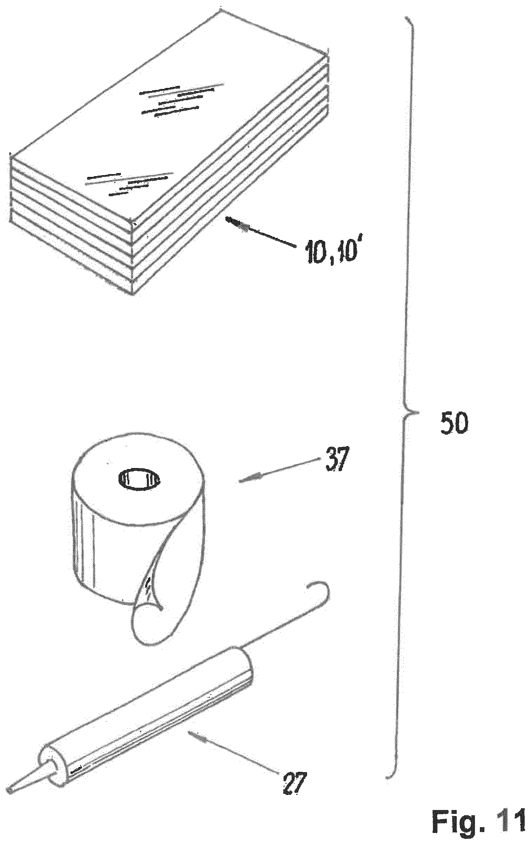

Der Fig. 11 ist ein Sanierungssatz 50 zu entnehmen, umfassend im Wesentlichen eine aufeinander abgestimmte Anzahl von Plattenmodulen 10, 10', Dichtband-Rollen 37, von welcher die Abdichtband-Abschnitte 16, 17 abgelängt werden können, und Tube 27 mit Düse, enthaltend Kleb- und Dichtstoff "Wedi 610".

Bei den in den Figuren der Ausführungsbeispiele abgebildeten Plattenmodulen 10, 10' handelt es sich um mit einer Nutzschicht 31 versehene Bauplatten 30. In Kombination mit solchen Plattenmodulen kann das erfindungsgemäße Verfahren auch mit alle anderen Arten von Plattenmodulen wie Natursteinplatten, nicht mit einer Nutzschicht 31 versehene Bauplatten, Glasplatten etc. durchgeführt werden, soweit diese andere Plattenmodule wasserdicht sind oder zumindest einen wasserdichten Kern aufweisen.

### Bezugszeichenliste:

- 10, 10': Plattenmodul
- 11: Kern
- 12: Klebeschicht
- 13: Deckschicht
- 14: Boden (Bestand)
- 15: Wand (Bestand)
- 16: Abdichtband-Abschnitt
- 17: Abdichtband-Abschnitt
- 18: Übergang
- 19: Überlappungsbereich
- 20: Außenkontur
- 21: Abstand
- 22, 22', 22": Klebstoffraupe
- 23: Dichtstelle
- 24: Fuge
- 25: Öffnung
- 26: Rohrdurchführung
- 27: Tube (mit Dichtstoff)
- 28: Dichtmanschette
- 29: Schutzfolie
- 30: Bauplatte
- 31: Nutzschicht
- 32: Natursteinfliese
- 33: Beschädigungen
- 34: Umrandung
- 35: Ecke
- 36: Überlappung
- 37: Dichtband-Rolle
- 38: Estrich (schwimmend)
- 39: Trennschicht
- 40: Rohdecke
- 41: Entkopplungsband
- 50: Sanierungssatz
- 100: Feuchtraum

## Patentansprüche

1. Verfahren zur Sanierung und zum Neubau von Feuchträumen, wie Badezimmern, bei dem großformatige Plattenmodule (10; 10') an einer Wand (15) und/oder einem Boden (14) und/oder einer Raumdecke des Feuchtraums eingebracht werden und bei dem Plattenmodule (10; 10'), welche einen wasserundurchlässigen Kern (11) auf Basis eines Schaumkerns umfassen, zum Einbau in den Feuchtraum bereitgestellt werden, **gekennzeichnet durch** folgende Verfahrensschritte:
a) Festlegen einer Einbauposition eines Plattenmoduls (10; 10') am Boden (14) und/oder an der Wand (15) und/oder der Raumdecke des Feuchtraums;
b) Anbringen wenigstens eines wasserresistenten Abdichtband-Abschnittes (16; 17) auf der Wand (15) und/oder auf dem Boden (14) und/oder der Raumdecke des Feuchtraums in einer eine Außenkontur (20) des Plattenmoduls (10; 10') abbildenden Position, so dass im fertig montierten Zustand zwischen Plattenmodul (10, 10') und Wand (15), Boden (14) oder Raumdecke eine Abdichtung vorgesehen ist, die hinter dem Plattenmodul (10; 10') und damit in einem nach Anbringung der Plattenmodule (10; 10') nicht mehr zugänglichen Bereich angeordnet ist;
c) Aufbringen eines wasserresistenten Dichtklebers auf den wenigstens einen auf dem Boden (14) und/oder der Wand (15) und/oder der Raumdecke des Feuchtraums angebrachten Abdichtband-Abschnitt (16; 17), derart, dass der wasserdichte Dichtkleber im fertig montierten Zustand die Randbereiche zweier benachbarter Plattenmodule (10; 10') durchgängig unterfüttert;
d) Anpressen eines ersten Plattenmoduls (10; 10') auf einen ersten Teilbereich des Dichtkleber in einer Position, in der der Abdichtband-Abschnitt (16; 17) und ein zweiter Teil des Dichtklebers die Außenkontur (20) des Plattenmoduls (10; 10') überragt, so dass ein sich an das erste Plattenmodul (10, 10') anschließendes zweites Plattenmodul (10; 10') den das erste Plattenmodul (10; 10') überragenden Teil des Abdichtband-Abschnittes (16; 17) und den zweiten Teil des Dichtklebers abdeckt und zwischen dem ersten und dem zweiten Plattenmodul (10; 10') eine Dichtstelle (23) herstellbar ist, die verhindert, dass durch eine zwischen den Plattenmodulen (10; 10') ausgebildete Fuge (24) Feuchtigkeit in die Wand (15), den Boden (14) oder die Raumdecke gelangen kann.

2. Verfahren nach Anspruch 1 **dadurch gekennzeichnet, dass** der Kern (11) auf Basis eines Schaumkerns hergestellt ist, bei dem es sich um einem extrudierten oder expandierten Polystyrol-Hartschaumkern handelt.

3. Verfahren nach Anspruch 1 oder 2, **dadurch gekennzeichnet, dass** die Plattenmodule (10; 10') eine in einem zementären Mörtel eingebettete Deckschicht (13), eine Klebeschicht (12) und eine Nutzschicht (31) umfassen.

4. Verfahren nach einem der Ansprüche 1 bis 3, **dadurch gekennzeichnet, dass** bei zwei benachbarten Plattenmodulen (10; 10')
- zur Verbindung zweier in einer Ebene liegenden Plattenmodule (10; 10') der Abdichtband-Abschnitt (17) beim Anbringen auf dem Boden (14) und/oder auf der Wand (15) oder die Raumdecke flach aufgelegt wird, so dass ein flacher Überlappungsbereich (19) zweier aufeinanderstoßender und angepresster, Plattenmodule (10; 10') entsteht, wobei die Plattenmodule (10; 10') auf zwei mit einem Abstand (21) zueinander liegenden Klebstoffraupen (22, 22') angeordnet sind,
- zur Verbindung zweier zueinander unter einem Winkel angeordneten Plattenmodule (10; 10') der Abdichtband-Abschnitt (16) jeweils zur Hälfte auf die die abgewinkelte Verbindung bildenden Bereiche von Wänden (15) und/oder Böden (14) aufgelegt wird und danach auf den abgewinkelten Abdichtband-Abschnitt (16) Klebstoffraupen (22, 22') aufgebracht werden

5. Verfahren nach einem der Ansprüche 1 bis 4, **dadurch gekennzeichnet, dass** der Abdichtband-Abschnitt (16) über einen Übergang (18) des Bodens (14) zur Wand (15), an der Wand (15) anliegend, zuerst auf den Boden (14) klebend aufgelegt wird und nach dem Auflegen und Anpressen des Plattenmoduls (10; 10') auf den Boden (14) mit der Wand (15), vorzugsweise vermittels eines zusätzlichen Klebers, verklebt wird.

6. Verfahren nach einem der Ansprüche 1 bis 5, **dadurch gekennzeichnet, dass** der mit der Wand (15) verklebte und senkrecht zum Boden (14) angeordnete Abdichtband-Abschnitt (17) den entlang der Übergangslinie (18) des Bodens (14) zur Wand (15) verlaufenden Abdichtband-Abschnitt (16) zumindest teilweise überlappend verlegt wird, so dass auch im Kreuzungsbereich zweier Abdichtbänder (16, 17) wasserdichte Abdichtstellen ausbildbar sind.

7. Verfahren nach einem der Ansprüche 1 bis 6, **dadurch gekennzeichnet, dass** auf den Boden (14) und/oder auf die Wand (15) wenigstens eine zwischen den verlegten Abdichtband-Abschnitten (16; 17) geführte Klebstoffraupe (22") aufgetragen wird.

8. Verfahren nach Anspruch einem der Ansprüche 1 bis 7, **dadurch gekennzeichnet, dass** an dem vorgefertigten Plattenmodul (10; 10') wenigstens eine Ausnehmung bzw. durchgehende Öffnung (25) insbesondere für eine Rohrdurchführung (26) eingearbeitet wird.

9. Verfahren nach Anspruch 8, **dadurch gekennzeichnet, dass** zur Anbringung eines Plattenmoduls (10, 10') mit einer durchgehenden Öffnung (25) an einen Boden (14) oder eine Wand (15) wie folgt vorgegangen wird:
- um die Rohrdurchführung (26) herum wird Dichtkleber auf die Wand (15) aufgetragen,
- es wird eine flache Dichtmanschette (28) eingesetzt und eingedrückt,
- auf die Dichtmanschette (28) wird Dichtkleber ohne Unterbrechungen aufgetragen,
- das vorgefertigte Plattenmodul (10, 10') mit der Öffnung (25) wird auf die Klebstoffraupen (22") angepresst.

10. Verfahren nach einem der Ansprüche 1 bis 9, **dadurch gekennzeichnet, dass** ein Entkopplungsband (41) auf wenigstens einem äußeren Rand eines Plattenmoduls (10, 10') oder auf der Wand (15) angebracht wird, so dass Plattenmodul (10, 10') und Wand (15) im fertig eingebauten Zustand voneinander entkoppelt sind.

11. Verfahren nach einem der Ansprüche 1 bis 10, **dadurch gekennzeichnet, dass** die Oberkante des Abdichtband-Abschnittes (16) an die Höhe des Plattenmoduls (10) angepasst ist, so dass der Abdichtbandabschnitt (16) das Plattenmodul (10) nicht überragt.

12. Verfahren nach einem der Ansprüche 1 bis 11, **dadurch gekennzeichnet, dass** als Abdichtbandabschnitt (16; 17) ein Schaumstreifen, ein Blechstreifen, ein Folienstreifen, ein Kunststoffstreifen, ein hydrophober Dichtbandstreifen oder ein Bauplattenstreifen vorgesehen ist

## Claims

1. A method for the renovation and new construction of wet rooms, such as bathrooms, in which large-format panel modules (10; 10') are attached to a wall (15) and/or a floor (14) and/or a ceiling of the wet room, and where panel modules (10; 10') comprising a water-impermeable core (11) on the basis of a foam core are provided for installation in the wet room, **characterized by** the following method steps:
a) determining an installation position of a panel module (10; 10') on the floor (14) and/or the wall (15) and/or the ceiling of the wet room;
b) attaching at least one water-resistant sealing strip section (16; 17) on the wall (15) and/or on the floor (14) and/or on the ceiling of the wet room in a position which forms an outer contour (20) of the panel module (10; 10') so that, in the fully assembled state, a sealing is provided between panel module (10; 10') and wall (15), floor (14) or ceiling which is arranged behind the panel module (10; 10') and thus in a region that is no longer accessible after the panel modules (10; 10') have been installed;
c) applying a water-resistant sealing adhesive to the at least one sealing strip section (16; 17) attached to the floor (14) and/or the wall (15) and/or the ceiling of the wet room in such a manner that the watertight sealing adhesive continuously underlays the edge regions of two adjacent panel modules (10; 10') in the fully assembled state;
d) pressing a first panel module (10; 10') onto a first subregion of the sealing adhesive in a position in which the sealing strip section (16; 17) and a second part of the sealing adhesive protrude beyond the outer contour (20) of the panel module (10; 10') such that a second panel module (10; 10') following the first panel module (10, 10') covers the part of the sealing strip section (16; 17) protruding beyond the first panel module (10; 10') and the second part of the sealing adhesive and that a seal point (23) can be produced between the first and second panel module (10; 10') which prevents moisture from reaching the wall (15), the floor (14) or the ceiling through a joint (24) formed between the panel modules (10; 10').

2. The method as claimed in claim 1, **characterized in that** the core (11) is produced on the basis of a foam core which is an extruded or expanded polystyrene rigid foam core.

3. The method as claimed in claim 1 or 2, **characterized in that** the panel modules (10; 10') comprise a cover layer (13) embedded in cementitious mortar, an adhesive layer (12) and a wearing layer (31).

4. The method as claimed in any one of the claims 1 to 3, **characterized in that** in the case of two adjacent panel modules (10; 10')
- for connecting two panel modules (10; 10') lying in one plane, the sealing strip section (17) is laid flat on the floor (14) and/or on the wall (15) or the ceiling when it is attached, so that a flat overlap area (19) of two panel modules (10; 10') which abut one another and are pressed against one another is produced, wherein the panel modules (10; 10') are arranged on two adhesive beads (22, 22') lying at a distance (21) to one another,
- for connecting two panel modules (10; 10') arranged at an angle to one another, the sealing strip section (16) is placed with a respective half on the regions of walls (15) and/or floors (14) forming the angled connection and then adhesive beads (22, 22') are applied to the angled sealing strip section (16).

5. The method as claimed in any one of the claims 1 to 4, **characterized in that** the sealing strip section (16), over a transition area (18) of the floor (14) to the wall (15), is first adhesively attached to the floor (14) abutting against the wall (15) and, after the panel module (10; 10') has been placed and pressed onto the floor (14), to the wall (15), preferably by means of an additional adhesive.

6. The method as claimed in any one of the claims 1 to 5, **characterized in that** the sealing strip section (17) bonded to the wall (15) and perpendicular to the floor (14) is laid to at least partially overlap the sealing strip section (16) running along the transition line (18) of the floor (14) to the wall (15) so that watertight seal points can also be formed in the area where two sealing strips (16, 17) intersect.

7. The method as claimed in any one of the claims 1 to 6, **characterized in that** at least one adhesive bead (22") guided between the laid sealing strip sections (16; 17) is applied to the floor (14) and/or to the wall (15).

8. The method as claimed in any one of the claims 1 to 7, **characterized in that** at least one recess or continuous aperture (25), in particular for a pipe opening (26), is worked into the prefabricated panel module (10; 10').

9. The method as claimed in claim 8, **characterized in that** in order to mount a panel module (10, 10') with a continuous aperture (25) on a floor (14) or a wall (15), the following procedure is carried out:
- sealing adhesive is applied to the wall (15) around the pipe opening (26),
- a flat sealing collar (28) is inserted and pressed into place,
- sealing adhesive is applied without interruptions to the sealing collar (28),
- the prefabricated panel module (10, 10') with the aperture (25) is pressed upon the adhesive beads (22").

10. The method as claimed in any one of the claims 1 to 9, **characterized in that** a decoupling strip (41) is applied on at least one outer edge of a panel module (10, 10') or on the wall (15), so that panel module (10, 10') and wall (15) are decoupled from one another in the fully installed state.

11. The method according to any one of the claims 1 to 10, **characterized in that** the top edge of the sealing strip section (16) matches the height of the panel module (10) so that the sealing strip section (16) does not project beyond the panel module (10).

12. The method as claimed in any one of the claims 1 to 11, **characterized in that** a foam strip, a sheet metal strip, a foil strip, a plastic strip, a hydrophobic sealing tape strip or a building panel strip is provided as the sealing strip section (16; 17).

## Revendications

1. Procédé d'assainissement et de rénovation de pièces humides, telles que des salles de bains, procédé dans lequel des modules de plaque de grand format (10 ; 10') sont installés sur un mur (15) et/ou un sol (14) et/ou un plafond de la pièce humide et dans lequel des modules de plaque (10 ; 10'), qui comprennent un cœur imperméable (11) à base d'un cœur en mousse, sont prévus pour être installés dans la pièce humide, **caractérisé par** les étapes de procédé suivantes :
a) spécifier une position d'installation d'un module de plaque (10 ; 10') sur le sol (14) et/ou sur le mur (15) et/ou au plafond de la pièce humide ;
b) placer au moins une portion de ruban d'étanchéité (16 ; 17), résistante à l'eau, sur le mur (15) et/ou sur le sol (14) et/ou au plafond de la pièce humide à une position reproduisant un contour extérieur (20) du module de plaque (10 ; 10') de manière à prévoir, une fois le montage terminé, une garniture d'étanchéité entre le module de plaque (10, 10') et le mur (15), le sol (14) ou le plafond, laquelle garniture d'étanchéité est disposée derrière le module de plaque (10 ; 10') et donc dans une zone qui n'est plus accessible après la mise en place des modules de plaque (10 ; 10') ;
c) appliquer un adhésif d'étanchéité résistant à l'eau sur l'au moins une portion de ruban d'étanchéité (16 ; 17) fixée au sol (14) et/ou au mur (15) et/ou au plafond de la pièce humide de telle sorte que, une fois le montage terminé, l'adhésif d'étanchéité étanche à l'eau réalise un doublage d'un bout à l'autre des zones de bordure de deux modules de plaque adjacents (10 ; 10') ;
d) presser un premier module de plaque (10 ; 10') sur une première zone partielle de l'adhésif d'étanchéité à une position dans laquelle la portion de ruban d'étanchéité (16 ; 17) et une deuxième partie de l'adhésif d'étanchéité font saillie du contour extérieur (20) du module de plaque (10 ; 10') de sorte qu'un deuxième module de plaque (10 ; 10') adjacent au premier module de plaque (10, 10') recouvre la partie de la portion de ruban d'étanchéité (16 ; 17), qui fait saillie du premier module de plaque (10 ; 10'), et la deuxième partie de l'adhésif d'étanchéité et un point d'étanchéité (23) peut être réalisé entre le premier et le deuxième module de plaque (10 ; 10'), lequel empêche l'humidité de pénétrer dans le mur (15), le sol (14) ou le plafond à travers une jonction (24) formée entre les modules de plaque (10 ; 10').

2. Procédé selon la revendication 1, **caractérisé en ce que** le cœur (11) est réalisé à base d'un cœur en mousse qui est un cœur en mousse rigide en polystyrène extrudé ou expansé.

3. Procédé selon la revendication 1 ou 2, **caractérisé en ce que** les modules de plaques (10 ; 10') comprennent une couche de couverture (13) noyée dans un mortier cimentaire, une couche adhésive (12) et une couche d'usure (31).

4. Procédé selon l'une des revendications 1 à 3, **caractérisé en ce que**, pour deux modules de plaque adjacents (10 ; 10'),
- afin de relier deux modules de plaque (10 ; 10') situés dans un même plan, la portion de ruban d'étanchéité (17), lorsqu'elle est placée au sol (14) et/ou sur le mur (15) ou au plafond, est posée à plat de façon à générer une zone de chevauchement plate (19) de deux modules de plaque (10 ; 10') qui sont aboutés et pressés l'un contre l'autre, les modules de plaque (10 ; 10') étant disposés sur deux cordons d'adhésif (22, 22') à une distance (21) l'un de l'autre,
- afin de relier deux modules de plaque (10 ; 10') disposés angulairement l'un par rapport à l'autre, la portion de ruban d'étanchéité (16) est placée pour moitié sur les zones de murs (15) et/ou de sols (14) formant la liaison coudée puis des cordons d'adhésif (22, 22') sont appliqués sur la portion de ruban d'étanchéité coudé (16).

5. Procédé selon l'une des revendications 1 à 4, **caractérisé en ce que** la portion de ruban d'étanchéité (16) est appliquée de manière adhésive d'abord sur le sol (14) sur une transition (18) du sol (14) au mur (15), en appui sur le mur (15) et, après avoir placé et pressé le module de plaque (10 ; 10') sur le sol (14), est collée au mur (15), de préférence au moyen d'un adhésif supplémentaire.

6. Procédé selon l'une des revendications 1 à 5, **caractérisé en ce que** la portion de ruban d'étanchéité (17), collée au mur (15) et disposée perpendiculairement au sol (14), est posée en chevauchant au moins partiellement la portion de bande d'étanchéité (16) qui s'étend le long de la ligne de transition (18) du sol (14) au mur (15) de sorte que des points d'étanchéité, étanches à l'eau, peuvent également être formés dans la zone d'intersection de deux bandes d'étanchéité (16, 17).

7. Procédé selon l'une des revendications 1 à 6, **caractérisé en ce qu'**au moins un cordon d'adhésif (22"), guidé entre les portions de ruban d'étanchéité posés (16 ; 17), est appliqué sur le sol (14) et/ou sur le mur (15).

8. Procédé selon l'une des revendications 1 à 7, **caractérisé en ce qu'**au moins un évidement ou une ouverture traversante (25), destinés notamment à un passage de canalisation (26), est intégré au module de plaque préfabriqué (10 ; 10').

9. Procédé selon la revendication 8, **caractérisé en ce que** le processus de fixation d'un module de plaque (10, 10') pourvu d'une ouverture traversante (25) à un sol (14) ou un mur (15) est le suivant :
- un adhésif d'étanchéité est appliqué sur le mur (15) autour du passage de canalisation (26),
- un collier d'étanchéité plat (28) est inséré et enfoncé,
- un adhésif d'étanchéité est appliqué sans interruption sur le collier d'étanchéité (28),
- le module de panneau préfabriqué (10, 10') pourvu de l'ouverture (25) est pressé sur les cordons d'adhésif (22").

10. Procédé selon l'une des revendications 1 à 9, **caractérisé en ce qu'**une bande de découplage (41) est fixée sur au moins un bord extérieur d'un module de plaque (10, 10') ou au mur (15) de sorte que le module de plaque (10, 10') et le mur (15) soient découplés l'un de l'autre une fois le montage terminé.

11. Procédé selon l'une des revendications 1 à 10, **caractérisé en ce que** le bord supérieur de la portion de ruban d'étanchéité (16) est adapté à la hauteur du module de plaque (10) de sorte que la portion de ruban d'étanchéité (16) ne fasse pas saillie du module de plaque (10).

12. Procédé selon l'une des revendications 1 à 11, **caractérisé en ce qu'**une bande de mousse, une bande de tôle, une bande de film, une bande de matière synthétique, une bande de ruban d'étanchéité hydrophobe ou une bande de panneau de construction est prévue comme portion de ruban d'étanchéité (16 ; 17).
